(19) Europäisches Patentamt
European Patent Office
Office européen des brevets

(11) EP 2 612 883 A1

(12) **EUROPEAN PATENT APPLICATION**
published in accordance with Art. 153(4) EPC

(43) Date of publication:
**10.07.2013 Bulletin 2013/28**

(21) Application number: **11821325.5**

(22) Date of filing: **31.08.2011**

(51) Int Cl.:
***C08L 33/12*** *(2006.01)* ***C08L 53/00*** *(2006.01)*
***C08L 83/04*** *(2006.01)*

(86) International application number:
**PCT/JP2011/004862**

(87) International publication number:
**WO 2012/029304 (08.03.2012 Gazette 2012/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2010 JP 2010195179**

(71) Applicant: **Kuraray Co., Ltd.**
**Okayama 710-0801 (JP)**

(72) Inventors:
- **MIYAKE, Katsuji**
  **Tokyo 100-8115 (JP)**
- **OZAWA, Hiroshi**
  **Tainai-shi**
  **Niigata 959-2691 (JP)**
- **KONISHI, Hiroyuki**
  **Tainai-shi**
  **Niigata 959-2691 (JP)**

(74) Representative: **Müller-Boré & Partner Patentanwälte**
**Grafinger Straße 2**
**81671 München (DE)**

(54) **POLYMER COMPOSITION AND MOLDED PRODUCT**

(57) A polymer composition comprising a methacrylic resin (A) having not less than 50% by mass of repeated units derived from methyl methacrylate, a block copolymer (B) having a polymer block (a) composed of repeated units derived from an alkyl (meth)acrylate ester and a polymer block (b) composed of repeated units derived from a conjugated diene compound and flowable polyorganosiloxane (C), wherein the amount of the block copolymer (B) is 1 to 80 parts by mass relative to 100 parts by mass of the methacrylic resin (A), the amount of the flowable polyorganosiloxane (C) is 0.05 to 0.5 part by mass relative to 100 parts by mass of the block copolymer (B), and a phase composed of the block copolymer (B) is dispersed in a continuous phase composed of the methacrylic resins (A).

EP 2 612 883 A1

## Description

TECHNICAL FIELD

The present invention relates to a molded article having excellent impact resistance, rigidity, surface hardness and transparency, and a polymer composition to obtain it.

BACKGROUND ART

A methacrylic resin represented by poly(methyl methacrylate) shows excellent rigidity, surface hardness and transparency to give a molded article a beautiful appearance. Based on this viewpoint, a molded article of a methacrylic resin is used for, for example, a signboard component, a display component, an illuminator component, an interior component, a building component, a transportation equipment related component, an electronic device component, a medical related component, an optics related component, a traffic related component and the like. However, a methacrylic resin conventionally has a drawback of low impact resistance, and many attempts for improvement have been tried.

For example, Patent Documents 1 to 5 disclose a methacrylic polymer composition comprising a continuous phase and a dispersed phase, wherein the continuous phase is composed of a methacrylic resin having not less than 50% by mass of repeating units derived from methyl methacrylate, and the dispersed phase is composed of a block copolymer having a polymer block composed of repeating units derived from an alkyl (meth)acrylate ester and a polymer block composed of repeating units derived from a conjugated diene compound. These methacrylic polymer compositions have been shown to have good impact resistance, rigidity, transparency and the like.

PRIOR ARTS LIST

Patent Document 1 : WO2008/032732
Patent Document 2 : JP 2009-227997 A
Patent Document 3 : JP 2009-227998 A
Patent Document 4 : JP 2009-227999 A
Patent Document 5 : JP 2009-235396 A

SUMMARY OF THE INVENTION

PROBLEMS TO BE RESOLVED BY THE INVENTION

Nonetheless, due to recent rapid advances in technical development, further improvement in a property of a methacrylic polymer composition is required.
Accordingly, an object of the present invention is to provide a molded article having excellent impact resistance, rigidity, surface hardness and transparency, and a polymer composition to obtain it.

MEANS FOR SOLVING THE PROBLEMS

The present inventors extensively studied to achieve the above object. As a result, we found a polymer composition comprising a specific methacrylic resin (A), a specific block copolymer

(B) and flowable polyorganosiloxane (C) in a specific ratio and in a specific phase structure. In addition, we also found that a molded article having better impact resistance, rigidity, surface hardness and transparency than a conventional article can be easily obtained by molding of the polymer composition. We completed the present invention by further studies based on this finding.

Accordingly, the present invention includes the following aspects:

[1] A polymer composition comprising a methacrylic resin (A) having not less than 50% by mass of repeating units derived from methyl methacrylate, a block copolymer (B) having a polymer block (a) composed of repeating units derived from an alkyl (meth)acrylate ester and a polymer block (b) composed of repeating units derived from a conjugated diene compound, and flowable polyorganosiloxane (C),
wherein the amount of the block copolymer (B) is 1 to 80 parts by mass relative to 100 parts by mass of the methacrylic

resin (A),
the amount of the flowable polyorganosiloxane (C) is 0.05 to 0.5 part by mass relative to 100 parts by mass of the block copolymer (B), and
a phase composed of the block copolymer (B) is dispersed in a continuous phase composed of the methacrylic resin (A).

[2] The polymer composition of [1], wherein the flowable polyorganosiloxane (C) is polydimethylsiloxane.
[3] The polymer composition of [1] or [2], wherein the flowable polyorganosiloxane (C) has a viscosity of 0.01 to 1 Pa·s at 25 °C.
[4] The polymer composition of any one of [1] to [3], wherein the flowable polyorganosiloxane (C) has a refractive index of 1.30 to 1.60.
[5] The polymer composition of any one of [1] to [3], wherein the block copolymer (B) is a star shaped block copolymer composed of a plural of arm polymer blocks and has a number average molecular weight based on polystyrene as calculated by gel permeation chromatography satisfies the expression: [Number average molecular weight of the star shaped block copolymer] > 2 × [Number average molecular weight of the arm polymer block].
[6] The polymer composition of any one of [1] to [4], wherein the alkyl (meth)acrylate ester comprises n-butyl acrylate, and the conjugated diene compound comprises 1,3-butadiene.

[7] The polymer composition of any one of [1] to [5], wherein the block copolymer (B) has a refractive index of 1.48 to 1.50.
[8] The polymer composition of [5], wherein the arm polymer block is an a-b diblock copolymer.
[9] The polymer composition of [1] to [7], wherein the block copolymer (B) is a star shaped block copolymer represented by $(a\text{-}b\text{-})_nX$ or $(b\text{-}a\text{-})_nX$.
[10] The polymer composition of any one of [1] to [9], wherein the polymer block (a) has a glass transition temperature of not higher than 0°C.
[11] The polymer composition of any one of [1] to [10], wherein the polymer block (b) has a glass transition temperature of not higher than 0°C.

[12] The polymer composition of any one of [1] to [11], wherein the mass ratio of the polymer block (a)/the polymer block (b) is 30/70 to 65/35.
[13] The polymer composition of any one of [1] to [12], wherein the methacrylic resin (A) has a weight average molecular weight of 70,000 to 200,000.
[14] The polymer composition of any one of [1] to [13], wherein the methacrylic resin (A) has the ratio of the weight average molecular weight/the number average molecular weight of 1.9 to 3.0.

[15] The polymer composition of [1] to [14], wherein the mean diameter of the dispersed phase is 0.05 to 2 μm.
[16] The polymer composition of any one of [1] to [15], wherein the dispersed phase forms a sea-island structure, and a mean value of the total area of island phases in the dispersed phase is not less than 30% of the mean area of the dispersed phase.
[17] The polymer composition of any one of [1] to [16], further comprising an antioxidant, a heat deterioration inhibitor, an ultraviolet light absorbent and/or a parting agent.

[18] A molded article composed of the polymer composition of any one of [1] to [17].

ADVANTAGEOUS EFFECTS OF THE INVENTION

A polymer composition of the present invention has excellent molding workability and gives a resulting molded article a good appearance. Molding of the polymer composition of the present invention can give a molded article having

excellent impact resistance, rigidity, surface hardness and transparency.

EMBODIMENTS FOR CARRYING OUT THE INVENTION

The polymer composition of the present invention comprises a methacrylic resin (A), a block copolymer (B) and polyorganosiloxane (C).

[Methacrylic resin (A)]

A methacrylic resin (A) used in the present invention has not less than 50% by mass, preferably not less than 80% by mass, and more preferably not less than 90% by mass of repeating units derived from methyl methacrylate.

There is no particular limitation for repeating units other than the repeating unit derived from methyl methacrylate as long as it is a repeating unit derived from other vinyl monomers copolymerizable with methyl methacrylate. The other vinyl monomers copolymerizable with methyl methacrylate include alkyl acrylate esters such as methyl acrylate, ethyl acrylate, butyl acrylate and the like; alkyl methacrylate esters, except for methyl methacrylate such as ethyl methacrylate, butyl methacrylate and the like; acrylamide, methacrylamide, acrylonitrile, methacrylonitrile, styrene, $\alpha$-methyl styrene and the like.

A mass ratio of the repeating unit derived from methyl methacrylate/the repeating unit derived from other monomers is 50/50 to 100/0, preferably 80/20 to 99/1, more preferably 90/10 to 98/2.

The methacrylic resin (A) has a weight average molecular weight (hereafter, may be referred to as Mw for short) of preferably 70,000 to 200,000, more preferably 80,000 to 150,000, and in particular, preferably 90,000 to 120,000. If Mw is too small, the impact resistance and toughness of a molded article obtained from the polymer composition tend to be reduced. If Mw is too large, the fluidity of the polymer composition is decreased, and the molding workability tends to be reduced.

The methacrylic resin (A) has a ratio of weight average molecular weight/number average molecular weight (hereafter, the ratio may be described as a molecular weight distribution) of preferably 1.9 to 3.0, more preferably 2.1 to 2.8, and in particular preferably 2.2 to 2.7. A small molecular weight distribution tends to decrease the molding workability of the polymer composition. A large molecular weight distribution tends to decrease the impact resistance of a molded article obtained from the polymer composition to easily make it brittle.
Note that the weight average molecular weight and number average molecular weight are a molecular weight based on standard polystyrene as measured by GPC (gel permeation chromatography).
Moreover, a molecular weight and a molecular weight distribution of the methacrylic resin (A) can be controlled by adjusting a type, the amount and the like of a polymerization initiator and a chain transfer agent.

[Block copolymer (B)]

The block copolymer (B) has a polymer block (a) composed of repeating units derived from an alkyl (meth) acrylate ester and a polymer block (b) composed of repeating units derived from a conjugated diene compound. Note that the above "(meth)acrylate " means "methacrylate or acrylate." A glass transition temperature of the polymer block (a) is preferably not higher than 0°C, more preferably not higher than -10°C. A glass transition temperature of the polymer block (b) is preferably not higher than 0°C, more preferably not higher than -10°C.

The repeating unit derived from an alkyl (meth)acrylate ester in the polymer block (a) is one obtained by addition polymerization of the alkyl (meth)acrylate ester.

Alkyl methacrylate esters include methyl methacrylate, ethyl methacrylate, butyl methacrylate, cyclohexyl methacrylate and the like, and alkyl acrylate esters include methyl acrylate, ethyl acrylate, n-butyl acrylate, i-butyl acrylate, 2-ethylhexyl acrylate and the like. These may be polymerized singly, or copolymerized in combination of two or more. Among them, desirable is a monomer or a combination of monomers which gives a polymer block (a) having a glass transition temperature (hereafter, may be referred to as Tg for short) of preferably not higher than 0°C, more preferably not higher than -10°C. For such a monomer, n-butyl acrylate and/or 2-ethylhexyl acrylate are preferred, and n-butyl acrylate is more preferred.

A repeating unit derived from a conjugated diene compound in the polymer block (b) is one obtained by addition polymerization of the conjugated diene compound.

Conjugated diene compounds include 1,3-butadiene, isoprene, 1,3-pentadiene, 2,3-dimethylbutadiene and the like. These may be polymerized as singly, or copolymerized in combination of two or more. Among them, desirable is a monomer or a combination of monomers which gives a polymer block (b) having a Tg of preferably not higher than 0°C, more preferably not higher than -10°C. For such a monomer, 1,3-butadiene and/or isoprene are preferred, and 1,3-butadiene is more preferred.

A conjugated diene compound may undergo 1,4-addition polymerization, or 1,2- or 3,4-addition polymerization.

A carbon-carbon double bond will be formed on a main chain of a molecule by 1,4-addition polymerization of a conjugated diene compound. A vinyl group attached on a main chain of a molecule as a side chain, i.e., a side chain vinyl will be formed by 1,2- or 3,4-addition polymerization of a conjugated diene compound. The carbon-carbon double bond on a main chain of a molecule and/or the side chain vinyl can serve as a starting point of a graft reaction or a cross-linking reaction. The attached amount of side chain vinyl contained in the polymer block (b) is preferably 10 mol% to 60 mol%, more preferably 20 mol% to 60 mol%, even more preferably 20 mol% to 50 mol%.
The attached amount of side chain vinyl can be increased by adding a polar compound such as ethers to the polymerization reaction system.

The attached amount of side chain vinyl in the polymer block (b) appears to affect the amount of the methacrylic resin (A) grafted onto the block copolymer (B) as described below, a size of a dispersed phase composed of the block copolymers (B), a degree of cross-linking of the block copolymer (B) and the like, which together affect the impact resistance, weather resistance, surface gloss, thermal stability and the like of a molded article obtained from the polymer composition.
If the attached amount of side chain vinyl is too small, the amount of the methacrylic resin (A) grafted onto the block copolymer (B) is lowered, and the impact resistance tends to be reduced. If the attached amount of side chain vinyl is too large, a dispersed phase composed of the block copolymer (B) easily aggregates, and a molded article tends to have poor transparency and surface properties.

Note that the attached amount of side chain vinyl is expressed in terms of a proportion [mol%] of a vinyl group attached on a main chain of a molecule as a side chain within a carbon-carbon double bond in an unit derived from a conjugated diene compound. For example, for a polymer block (b) comprising of 1,3-butadiene units, the attached amount of side chain vinyl $V_0$ [%] can be calculated using the following equation by determining integrated intensity $C_0$ of proton signals at chemical shifts between 4.7 and 5.2 ppm corresponding to 1,2-vinyl (=$CH_2$) and integrated intensity Do of a vinyl proton signal (=CH-) at a chemical shift between 5.2 and 5.8 ppm respectively as analyzed using $^1$H-NMR.

$$V_0 = [(C_0/2)/\{(C_0/2) + (D_0 - (C_0/2))/2\}] \times 100$$

The polymer block (b) may have a partly hydrogenated carbon-carbon double bond on a main chain of a molecule and/or a partly hydrogenated vinyl group attached to the main chain of the molecule as a side chain. According to the present invention, a degree of hydrogenation in the polymer block (b) is preferably less than 70 mol%, more preferably less than 50 mol%. There is no particular limitation for a method of hydrogenation, and for example, hydrogenation is achieved by a method disclosed in JP H5-20442 A.

The block copolymer (B) may have one polymer block (a) and one polymer block (b) each, or may have two or more polymer blocks (a) and/or two or more polymer blocks (b). Coupling modes for the block copolymer include a linear block copolymer represented by an a-b diblock copolymer, an a-b-a triblock copolymer, a b-a-b triblock copolymer, an a-b-a-b tetrablock copolymer and the like; a star shaped block copolymer represented by $(b\text{-}a\text{-})_nX$, $(a\text{-}b\text{-})_nX$ and the like, a graft block copolymer represented by an a-g-b and the like. Note that "n" is a value greater than 2. "g" represents a symbol indicating a graft bonding. "X" represents a coupling residue. "a" represents a polymer block (a), and "b" represents a polymer block (b).

The block copolymer (B) may have a gradient connection between a polymer block (a) and a polymer block (b). A gradient connection is a moiety having a compositional ratio of repeating units which gradually changes from a compositional ratio of repeating units of the polymer block (a) to a compositional ratio of repeating units of the polymer block (b). These block copolymers (B) may be used singly, or in combination of two or more.

There is no particular limitation for a mass ratio of Polymer block (a)/Polymer block (b), but 30/70 to 65/35 is preferred and 40/60 to 60/40 is more preferred.

The block copolymer (B) is not particularly limited by its refractive index, but the block copolymer (B) preferably has a refractive index almost the same as that of the methacrylic resin (A) in order to subject a polymer composition of the present invention to an optical application. Specifically, the block copolymer (B) has a refractive index of preferably 1.48 to 1.50, more preferably 1.485 to 1.495.

The block copolymer (B) is particularly preferred to be a star shaped block copolymer. A star shaped block copolymer comprises a copolymer in which a plural of arm polymer blocks are linked by a group derived from a polyfunctional monomer, a polyfunctional coupling agent and the like, i.e., a coupling residue.

A plural of arm polymer blocks in the star shaped block copolymer may be the same type of block copolymers, or a different type of block copolymers. Arm polymer blocks include an a-b diblock copolymer, a b-a diblock copolymer, an a-b-a triblock copolymer, a b-a-b triblock copolymer, an a-b-a-b tetra block copolymer and the like. Among them, an a-b diblock copolymer is preferred. Note that "a" represents a polymer block (a) and "b" represents a polymer block (b).

A star shaped block copolymer represented by the following chemical constitution formula is particularly preferred to be used in the present invention:

$$(\text{Polymer block (b)-Polymer block (a)-})_n X$$

(wherein "X" represents a coupling residue, and "n" represents a number greater than 2.)

A preferred star shaped block copolymer satisfies the expression: [Mn of the star shaped block copolymer > 2 × [Mn of the arm polymer block] wherein a number average molecular weight (hereafter, may be referred to as Mn for short) is based on standard polystyrene as calculated by GPC.

Note that a ratio of [Mn of the star shaped block copolymer]/[Mn of the arm polymer block] may be referred to as an arm number.

A number average molecular weight of the star shaped block copolymer set in the range more than two times greater than that of the arm polymer block increases a mechanical strength of the polymer composition against shearing. For the ease of industrial production, an Mn of the star shaped block copolymer is preferably more than two times and not more than 100 times, more preferably 2.5 times to 50 times, even more preferably 3 times to 10 times greater than that of the arm polymer block.

Note that a straight-chain block copolymer consisting only of an arm polymer block which is not connected by a coupling residue may be included in the star shaped block copolymer.

An Mn of the block copolymer (B) is preferably 5,000 to 1,000,000, more preferably 10,000 to 800,000, even more preferably 50,000 to 500,000 in order to improve the impact resistance of the polymer composition obtained and handling properties of a molded article thereof.

There is no particular limitation for a method of manufacturing the block copolymer (B), but a manufacturing method using living polymerization is preferred for a method of obtaining a star shaped block copolymer suitable for the present invention having a narrow molecular weight distribution. When living polymerization is used for production, a method in which anionic polymerization is performed using an organoalkalimetal compound as a polymerization initiator in the presence of an organoaluminium compound is preferred because a block copolymer having a narrower molecular weight distribution and leaving less residual monomers can be manufactured under relatively mild temperature conditions.

For an organoalkalimetal compound, organolithium compounds such as alkyllithium and alkylenedilithium are preferred.

For an organoaluminium compound, isobutyl bis(2,6-di-tert-butyl-4-methylphenoxy)aluminium, isobutyl bis(2,6-di-tert-butylphenoxy)aluminium, or isobutyl[2,2'-methylene bis(4-methyl-6-tert-butylphenoxy)]aluminium is preferred because their handling is easy and anionic polymerization reaction can proceed without their inactivation under relatively mild temperature conditions.

In the above anion living polymerization, a nitrogen containing compound may coexist in the reaction field to stabilize the reaction if desired. Nitrogen containing compounds include ethers such as dimethyl ether, dimethoxyethane, diethoxyethane, 12-crown-4-ether; triethylamine, N,N,N',N'-tetramethylethylenediamine, N,N,N',N",N"-pentamethyldiethylenetriamine, 1,1,4,7,10,10-hexamethyltriethylenetetramine, pyridine, 2,2'-dipyridine and the like.

A star shaped block copolymer can be obtained by adding a polyfunctional monomer to a reaction mixture of the block copolymer obtained by the above anionic polymerization and the like, or by adding a polyfunctional coupling agent to allow a coupling reaction to occur.

A polyfunctional monomer is a compound having two or more ethylenically unsaturated groups, specifically including allyl methacrylate, ethylene glycol dimethacrylate, 1,3-butylene glycol dimethacrylate, divinylbenzene, 1,6-hexanediol diacrylate and the like.

A polyfunctional coupling agent is a compound having three or more reactive groups, specifically including trichloromethylsilane, tetrachlorosilane, butyltrichlorosilane, bis(trichlorosilyl)ethane, tetrachlorotin, butyltrichlorotin, tetrachlorogermanium and the like.

The amount of the block copolymer (B) in the polymer composition of the present invention is 1 to 80 parts by mass, preferably 2 to 30 parts by mass, more preferably 3 to 20 parts by mass relative to 100 parts by mass of the methacrylic resin (A). Less than 1 part by mass of the block copolymer (B) results in a brittle polymer composition to give a less improving effect on impact resistance. On the other hand, more than 80 parts by mass of the block copolymers (B) may tend to decrease surface hardness, thermal resistance, or rigidity, as well as may decrease transparency and surface smoothness.

[Flowable polyorganosiloxane (C)]

The flowable polyorganosiloxane (C) used in the present invention is not particularly limited, as long as it is a

polymeric compound showing fluidity comprising a repeating unit represented by the following formula [I]. Note that fluidity herein means that a viscosity at 25°C is not more than 10 Pa·s.

[Formula 1]

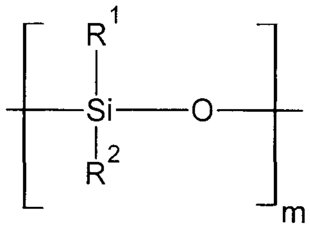

[I]

in the formula [1], $R^1$ and $R^2$ are independently an organic group, respectively. The organic groups include an alkyl group, a phenyl group, an aryl group and the like.

The flowable polyorganosiloxanes (C) include, for example, polydimethylsiloxane, polymethylphenylsiloxane, polydiphenylsiloxane and the like. Among them, a polydimethylsiloxane in which $R^1$ and $R^2$ are methyl groups is preferred. The flowable polyorganosiloxane (C) used in the present invention may be a denatured type in which an epoxy group, an amino group, a carboxyl group, a methacrylic group, a carbinol group, a mercapto group, a phenolic group, a polyether group, a silanol group, a fluoroalkyl group, an aralkyl group and the like are introduced. These flowable polyorganosiloxanes can be used singly or in combination of two or more.

The flowable polyorganosiloxane (C) is preferably 0.01 to 1 Pa·s, more preferably 0.05 to 0.5 Pa·s in a viscosity at 25°C. An impact resistance imparting effect of the polymer composition is maintained when a viscosity is within the range. Two or more flowable polyorganosiloxanes having different viscosities may be mixed to adjust a viscosity to 0.01 to 1 Pa·s.

The flowable polyorganosiloxane (C) in the polymer composition of the present invention has a refractive index of preferably 1.30 to 1.60, more preferably 1.40 to 1.50. The transparency of the polymer composition is maintained when a refractive index is within the range. Two or more flowable polyorganosiloxanes having different refractive indices may be mixed to adjust a refractive index to 1.40 to 1.50.

The content of the flowable polyorganosiloxane (C) in the polymer composition of the present invention is 0.05 to 0.5 part by mass, preferably 0.1 to 0.4 part by mass, more preferably 0.2 to 0.3 part by mass relative to 100 parts by mass of the block copolymer (B). If the content of the flowable polyorganosiloxane (C) is too small, an impact resistance imparting effect tends to be insufficient. On the other hand, if the content of the flowable polyorganosiloxane (C) is too large, transparency tends to be decreased.

The polymer composition of the present invention may further comprise other various additives if desired. The additives include an antioxidant, a heat deterioration inhibitor, a heat ultraviolet light absorbent, a light stabilizer, a lubricant, a parting agent, a polymer processing aid, an antistatic agent, a flame retarder, dyes and pigments, a light diffusing agent, an organic dye, a delustering agent, an impact resistance modifier, a phosphor and the like.

An antioxidant is a substance which shows by itself an effect of preventing oxidative degradation of resin in the presence of oxygen. For example, antioxidants include a phosphorus antioxidant, a hindered phenol antioxidant, a thioether antioxidant and the like. These antioxidants can be used singly or in combination of two or more. Among them, a phosphorus antioxidant and a hindered phenol antioxidant are preferred in terms of an effect of preventing deterioration of optical properties by coloring, and a combination use of a phosphorus antioxidant and a hindered phenol antioxidant is more preferred.
When using a phosphorus antioxidant together with a hindered phenol antioxidant, there is no particular limitation for their ratio, but a mass ratio of the phosphorus antioxidant/the hindered phenol antioxidant is preferably 1/5 to 2/1, more preferably 1/2 to 1/1.

For a phosphorus antioxidant, 2,2-methylenebis(4,6-di-t-butylphenyl)octylphosphite (ADEKA CORPORATION; product name; ADEKA STUB HP-10), Tris(2,4-di-t-buthylphenyl)phosphite (Ciba Specialty Chemicals Corp.; product name: IRUGAFOS168) and the like are preferred.

For a hindered phenol antioxidant, pentaerythrityl tetrakis [3-(3,5-di-t-butyl-4-hydroxyphenyl)propionate] (Ciba Specialty Chemicals Corp.; product name IRGANOX1010), octadecyl-3-(3,5-di-t-butyl-4-hydroxyphenyl)propionate (Ciba Specialty Chemicals Corp.; product name IRGANOX1076) and the like are preferred.

When using an antioxidant in the present invention, its content is preferably 0.001 to 1 part by mass, more preferably 0.005 to 0.5 part by mass, even more preferably 0.01 to 0.3 part by mass relative to 100 parts by mass of the polymer composition. If a content of an antioxidant is small, an antioxidation effect tends to be insufficient. On the other

hand, if a content of an antioxidant is too large, productivity tends to be decreased due to mold contamination, and poor molding due to the development of a silver streak, a burned mark and the like tends to be caused.

A heat deterioration inhibitor is a substance which can prevent heat deterioration of resin by capturing a polymer radical which is generated upon exposure to high temperature essentially in the absence of oxygen.
For the heat deterioration inhibitor, 2-t-butyl-6-(3'-t-butyl-5'-methyl-hydroxybenzyl)-4-methylphenyl acrylate (Sumitomo Chemical Co., Ltd.; product name SUMILIZER GM), 2,4-di-t-amyl-6-(3',5'-di-t-amyl-2'-hydroxy-α-methylbenzyl)phenyl acrylate (Sumitomo Chemical Co., Ltd.; product name SUMILIZER GS) and the like are preferred.

The amount of the heat deterioration inhibitor is preferably 0.005 to 0.5 part by mass, more preferably 0.01 to 0.5 part by mass, even more preferably 0.02 to 0.2 part by mass relative to a total of 100 parts by mass of the methacrylic resin (A) and the block copolymer (B). If the amount of the heat deterioration inhibitor is too small, an anti-heat deterioration effect tends to be decreased. If the amount of the heat deterioration inhibitor is too large, decreased productivity due to mold contamination, or poor molding due to the development of a silver streak, a burned mark and the like tends to be caused.

An ultraviolet light absorbent is a compound which is capable of absorbing ultraviolet light. An ultraviolet light absorbent is a compound which is said to have a function to transform light energy into thermal energy.
Ultraviolet light absorbents include benzophenones, benzotriazols, triazines, benzoates, salicylates, cyanoacrylates, Oxaldianilides, malonic esters, formamidines and the like. These may be used singly or in combination of two or more. Among them, preferred is benzotriazols or an ultraviolet light absorbent having a maximum molar extinction coefficient $\varepsilon_{max}$ of not more than 1200 $dm^3 \cdot mol^{-1}cm^{-1}$ at a wavelength between 380 and 450 nm.

Benzotriazols are preferred as an ultraviolet light absorbent, because they effectively suppress a deterioration of the optical properties such as coloring by ultraviolet exposure, when the polymer composition of the present invention is applied to an application in which the above properties are required.

For benzotriazols, preferred are 2-(2H-benzotriazol-2-yl)-4-(1,1,3,3-tetramethylbutyl)phenol (Ciba Specialty Chemicals Corp.; product name TINUVIN329), 2-(2H-benzotriazol-2-yl)-4,6-bis(1-methyl-1-phenylethyl)phenol (Ciba Specialty Chemicals Corp.; product name TINUVIN234) and the like.

In addition, an ultraviolet light absorbent having a maximum molar extinction coefficient $\varepsilon_{max}$ of not more than 1200 $dm^3 \cdot mol^{-1}cm^{-1}$ at a wavelength between 380 and 450 nm can suppress yellowish color of a molded article obtained. The above ultraviolet light absorbent is preferred as an ultraviolet light absorbent when the polymer composition of the present invention is applied to an application in which the above properties are required.

Note that the maximum molar extinction coefficient $\varepsilon_{max}$ of an ultraviolet light absorbent is measured as follows. To 1 L of cyclohexane, 10.00 mg of an ultraviolet light absorbent is added and dissolved until no undissolved materials are left as observed by eye. The solution is transferred into a 1 cm × 1 cm × 3 cm quartz glass cell, and the absorbance at a wavelength of 380 to 450 nm is measured using a Hitachi U-3410 spectrophotometer.
A maximum molar extinction coefficient $\varepsilon_{max}$ is calculated by the following equation using the molecular weight (Mw) of an ultraviolet light absorbent, and the measured maximum absorbance ($A_{max}$) ·

$$\varepsilon_{max} = [A_{max} / (10 \times 10^{-3})] \times Mw$$

Ultraviolet light absorbents having a maximum molar extinction coefficient $\varepsilon_{max}$ of not more than 1200 $dm^3 \cdot mol^{-1}cm^{-1}$ at a wavelength between 380 and 450 nm include 2-ethyl-2'-ethoxy-oxalanilide (Clariant Japan K.K.; product name SANDUVOR VSU) and the like.
Among these ultraviolet light absorbents, benzotriazols are preferably used because they suppress resin deterioration due to ultraviolet exposure.

The amount of an ultraviolet light absorbent is preferably 0.005 to 1 part by mass, more preferably 0.01 to 0.5 part by mass, even more preferably 0.02 to 0.2 part by mass relative to a total 100 parts by mass of the methacrylic resin (A) and the block copolymer (B). If the amount of an ultraviolet light absorbent is too small, the effect of suppressing resin deterioration due to ultraviolet exposure tends to be insufficient. If the amount of an ultraviolet light absorbent is too large, decreased productivity due to mold contamination, or poor molding due to the development of a silver streak, die drool and the like tends to be caused.

A light stabilizer is a compound which is to said to have a function to capture a radical generated mainly by photooxidation. Suitable light stabilizers include hindered amines such as a compound having a structure of 2,2,6,6-tetraalkylpiperidine.
The amount of a light stabilizer is preferably 0.001 to 0.5 part by mass relative to 100 parts by mass of the polymer composition.

A parting agent is a compound which has a function to easily release a molded article from the mold. Parting

agents includes higher alcohols such as cetyl alcohol, stearyl alcohol and the like; glycerin higher fatty acid esters such as stearic acid monoglyceride, stearic acid diglyceride and the like. According to the present invention, for a parting agent, a combination use of higher alcohol and glycerin fatty acid monoester is preferred. When higher alcohol and glycerin fatty acid monoester are used together, there is no particular limitation for their ratio, but a mass ratio of higher alcohol/glycerin fatty acid monoester is preferably 2.5/1 to 3.5/1, more preferably 2.8/1 to 3.2/1.
The total amount of the parting agent is preferably not more than 0.5 part by mass, more preferably not more than 0.3 part by mass, even more preferably not more than 0.1 part by mass relative to 100 parts by mass of the polymer composition. If the total amount of the parting agent is too large, decreased productivity due to mold contamination, or poor molding due to the development of a silver streak, die drool and the like tends to be caused.

A polymer processing aid is a compound which produces an effect on thickness precision and film thinning when forming a polymer composition. A polymer processing aid, which is usually a polymer particle having a particle diameter of 0.05 to 0.5 μm, can be manufactured by the emulsion polymerization method.
The polymer particle may be a monolayer particle composed of a polymer having a single compositional ratio and a single limiting viscosity, or a multilayer particle composed of two or more polymers having different compositional ratios or limiting viscosities. Among them, preferably mentioned is a two-layered particle which has a polymer layer with a lower limiting viscosity in its inner layer, and a polymer layer with a higher limiting viscosity of 5 dl/g or higher in its outer layer.

A polymer processing aid preferably has an overall limiting viscosity of 3 to 6 dl/g. Too small limiting viscosity will reduce an effect to improve moldability. Too large limiting viscosity will easily reduce the melt fluidity of the polymer composition.
When using a polymer processing aid, the amount thereof is preferably 0.05 to 10 parts by mass, more preferably 0.1 to 5 parts by mass relative to 100 parts by mass of the polymer composition. If the amount of the polymer processing aid is too small, an effect to improve dimensional precision when molding tends to be reduced. Conversely, if the amount of the polymer processing aid is too large, the melt fluidity of the polymer composition tends to be reduced.

An impact resistance modifier may be used for the polymer composition of the present invention. Impact resistance modifiers include a core-shell modifier containing acrylic rubber or diene rubber as a core layer component; a modifier containing a plural of rubber particles and the like. An impact resistance modifier is preferably added in the amount less than its common usage.

For an organic dye, preferably used is a compound which has a function to transform ultraviolet light, which is deemed to be harmful to resin, into visible light. For example, terphenyl and the like can be mentioned.
Light diffusing agents and delustering agents include glass particles, polysiloxane cross-linked particles, cross-linked polymer particles, talc, calcium carbonate, barium sulfate and the like.
Phosphors include a fluorescent pigment, a fluorescent dye, a fluorescent white dye, a fluorescent whitening agent, a fluorescent bleaching agent and the like.

The polymer composition of the present invention comprises a phase composed of the block copolymer (B) being dispersed in a continuous phase composed of the methacrylic resin (A). Note that the flowable polyorganosiloxane (C) is preferably contained mainly in the dispersed phase.
A mean diameter of the dispersed phase composed of the block copolymers (B) is preferably 0.05 to 2 μm, more preferably 0.05 to 1 μm, even more preferably 0.08 to 0.5 μm. If the mean diameter of the dispersed phase is smaller than 0.05 μm, a molded article tends to be brittle to cause a decreased ease of handling. If the mean diameter of the dispersed phase is larger than 2 μm, transparency and surface properties tend to be reduced.

The dispersed phase preferably forms a sea-island structure in which an island phase composed of the methacrylic resin (A) is dispersed in a sea phase composed of the block copolymer (B), respectively. A mean value of the total area of island phases in the dispersed phase showing a sea-island structure is preferably not less than 30% of the mean area of the dispersed phase. In addition, the dispersed phase showing such a sea-island structure preferably accounts for not less than 30% by mass of the total dispersed phases. Note that a mean diameter and area of the dispersed phase and an area of the island phases can be obtained by electron micrographic observation. The polymer composition having a dispersed phase showing such a sea-island structure markedly improves the impact resistance of a molded article.

The polymer composition of the present invention is not limited by a manufacturing method thereof. For example, it can be manufactured by melting and kneading the methacrylic resin (A) and the block copolymer (B) in a single- or twin-screw melt extruder and the like, and adding the flowable polyorganosiloxane (C) and various additives, if desired, to the composition (AB) obtained, which is then subject to kneading. However, according to the present invention, it is preferably manufactured by obtaining the composition (AB) using an *in-situ* process, and adding the polyorganosiloxane (C) and various additives, if desired, to the composition (AB), which is then subject to kneading. The in-*situ* process is a process in which a composition comprising a continuous phase and a dispersed phase is directly prepared by creating a substance a in the presence of a substance β where the substance α and the substance β are intended to become a dispersed phase or a continuous phase.

The method of manufacturing the polymer composition of the present invention by the *in-situ* process comprises, for example, the following steps: first, the block copolymer (B) is dissolved in a monomer mixture containing methyl methacrylate and vinyl monomers copolymerizable therewith to prepare a liquid raw material.

Note that the methacrylic resin (A) will be obtained upon polymerization of the monomer mixture. A mass ratio of methyl methacrylate/vinyl monomers is preferably 50/50 to 100/0, more preferably 80/20 to 99/1, even more preferably 90/10 to 98/2.

When preparing the liquid raw material, the monomer mixture can be heated to around 30°C to 60°C, or a solvent can be used in order to promote dissolution of the block copolymer (B).

There is no particular limitation for the solvent as long as it can dissolve the monomer mixture, the methacrylic resin (A) obtained by polymerizing the monomer mixture and the block copolymer (B). For example, preferably, they include aromatic hydrocarbons such as benzene, toluene, ethylbenzene and the like. In addition, two or more solvents can be mixed and used if desired. The mixed solvent may contains a solvent which alone can not dissolve the monomer mixture, the methacrylic resin (A) obtained by polymerizing the monomer mixture and the block copolymer (B), for example, alcohols such as methanol, ethanol and butanol; ketones such as acetone and methyl ethyl ketone; aliphatic hydrocarbon such as hexane; alicyclic hydrocarbon such as cyclohexane, as long as the mixed solvent can dissolve the monomer mixture, the methacrylic resin (A) obtained by polymerizing the monomer mixture and the block copolymer (B). The amount of the solvent is preferably 0 to 100 parts by mass relative to 100 parts by mass of the monomer mixture. In addition, it is preferably in the range of 0 to 90% by mass when the total of methyl methacrylate, other vinyl monomers and the solvent is set to 100% by mass.

The amount of the block copolymer (B) in the liquid raw material is preferably 1 to 80 parts by mass, more preferably 2 to 30 parts by mass, even more preferably 3 to 20 parts by mass relative to 100 parts by mass of the monomer mixture. If the amount of the block copolymer (B) is too small, an improvement effect on the impact resistance of the polymer composition is small. If the amount of the block copolymer (B) is too large, the block copolymer (B) is difficult to be dispersed in a continuous phase composed of the methacrylic resins (A). In addition, the elastic modulus of the polymer composition is decreased, and its rigidity easily disappears.

Then a polymerization reaction of the monomer mixture is followed. Concomitantly with the polymerization reaction proceeds, two reactions appear to proceed: the one reaction in which the monomer mixture is grafted to the block copolymer (B) and the another reaction in which the block copolymer (B) is cross-linked to each other.

The polymerization reaction of the monomer mixture can be started by adding a polymerization initiator to the liquid raw material. In addition, a molecular weight, a degree of grafting, a cross-linking ratio of the polymer obtained can be adjusted by adding a chain transfer agent to the liquid raw material if desired.

There is no particular limitation for the polymerization initiator used in the present invention as long as it generates a reactive radical. For example, preferably, they include azo compounds such as azobisisobutyronitril, azobiscyclohexylcarbonitrile; organic peroxides such as benzoyl peroxide, t-butyl peroxybenzoate, di-t-butyl peroxide, dicumyl peroxide, 1,1-di(t-butylperoxy)3,3,5-trimethylcyclohexane, t-butylperoxyisopropylcarbonate, 1,1-di(t-butylperoxy)cyclohexane, 1,1,3,3-tetramethylbutylperoxy 2-ethylhexanoate, t-butylperoxy 2-ethylhexanoate and the like. These may be used singly or in combination of two or more.

In addition, the amount of a polymerization initiator added and a method of the addition and the like may be appropriately determined according to the purpose, and there is no particular limitation.

Chain transfer agents include alkyl mercaptans such as n-octylmercaptan, n-dodecylmercaptan, t-dodecylmercaptan, 1,4-butanedithiol, 1,6-hexanedithiol, ethylene glycol bisthiopropionate, butanediol bisthioglycolate, butanediol bisthiopropionate, hexandiol bisthioglycolate, hexandiol bisthiopropionate, trimethylolpropanetris-($\beta$-thiopropionate), pentaerythritol tetrakis thiopropionate; $\alpha$-methylstyrene dimer; terpinolene and the like. These may be used singly or in combination of two or more.

A ratio of polymerization conversion of the monomer mixture will be preferably not less than 70% by mass, more preferably not less than 80% by mass. A ratio of polymerization conversion of not less than 70% by mass improves the impact resistance of the polymer composition since a cross-linking reaction primarily starts to proceed when the polymerization conversion ratio becomes high.

The polymerization is preferably performed with strong stirring so that a shear force is applied to the liquid raw material. In an early stage of the polymerization, a polymerization reaction of the monomer mixture primarily proceeds to produce the methacrylic resin (A). As the ratio of polymerization conversion increases, a proportion of the methacrylic resin (A) produced by the polymerization reaction of the monomer mixture increases. In this early stage, the block copolymer (B) solution phase serves as a continuous phase, the methacrylic resin (A) solution phase, which is present in a small amount, is dispersed in the continuous phase.

When continuing the polymerization of the monomer mixture with a shear force applied, the relationship between the methacrylic resin (A) solution phase and the block copolymer (B) solution phase is reversed. That is, this phase inversion creates a state in which the methacrylic resin (A) solution phase serves as a continuous phase and the block copolymer (B) solution phase is dispersed in the continuous phase. The ratio of polymerization conversion of the monomer

mixture upon this phase inversion may vary depending on the volume ratio of the methacrylic resin (A) solution phase and the block copolymer (B) solution phase, the molecular weight of the block copolymer (B), the amount of the methacrylic resin grafted to the block copolymer (B), and if a solvent is used, the amount of the solvent and solvent species.

Note that the monomer mixture may be left behind inside the block copolymer (B) solution phase which turns into a dispersed phase by the phase inversion. This monomer mixture left behind undergoes a polymerization reaction in the block copolymer (B) solution phase to produce the methacrylic resin (A). As a result, a fine particulate island phase composed of the methacrylic resin (A) is formed in the dispersed phase composed of the block copolymers (B). Thereby the dispersed phase acquires a sea-island structure.

The polymerization is preferably performed by a bulk polymerization process or a solution polymerization process from the early stage of the polymerization until the phase inversion occurs. Thereby, the phase inversion between the methacrylic resin (A) solution phase and the block copolymer (B) solution phase easily occurs because a shearing force due to stirring is applied more to the block copolymer (B) solution phase.

Apparatuses for performing a bulk polymerization process or a solution polymerization process include a tank reactor equipped with a stirrer, a tube reactor equipped with a stirrer, a tube reactor with static stirring capability and the like. One or more of these apparatuses may be used, or a combination of two or more of different reactors may be used. In addition, the polymerization may be either a batch process or a continuous process.

The size of the dispersed phase can be controlled by these parameters such as the speed, rotative power and the like of a stirrer for a dynamic stirring reactor equipped with a stirrer and the like; and by various parameters such as the linear velocity of a reaction solution, the viscosity of the polymerization reaction solution, the graft ratio to the block copolymer (B) prior to the phase inversion for a reactor with static stirring. Note that after the phase inversion occurs, a bulk polymerization process or a solution polymerization process can be applicable, and in addition to these, a suspension polymerization process is also applicable.

Unreacted monomers and solvent are removed after completion of the polymerization if desired. There is no particular limitation for a method of removal, but heating devolatization is preferred. Devolatization methods include an equilibrium flash method and an adiabatic flash method. In particular, for the adiabatic flash method, devolatilization is performed preferably between 200°C and 300°C, more preferably between 220°C and 270°C. At a temperature of less than 200°C, devolatization requires more time and is likely to be insufficient. Insufficient devolatization may cause a poor appearance of a molded article, such as a silver streak. On the other hand, a temperature of more than 300°C may result in a colored composition (AB) due to oxidation, burning and the like.

Next, the flowable polyorganosiloxane (C) and various additives if desired are added to the composition (AB) obtained as described above, which is then subjected to kneading. The composition (AB) to which the flowable polyorganosiloxane (C) and the like are added may be a composition where unreacted monomers and solvent are not removed or a composition where unreacted monomer and solvent are removed.

Methods of adding and kneading are not limited by an addition means, an addition procedure, a kneading means, a kneading procedure and the like for each component. The flowable polyorganosiloxane (C) and the like may be added all together, or added in portions, or added continuously in a small portion.
Kneading may be performed simultaneously with addition of the flowable polyorganosiloxane (C) and the like or after addition of the flowable polyorganosiloxane (C) and the like under non-kneading conditions. For addition and kneading, mixing equipment such as a tumbler, a mixer and a blender; and kneading equipment such as a screw extruder can be used.

The polymer composition obtained according to the manufacturing methods described above may be diluted with the methacrylic resin (A) manufactured separately as long as the polymer composition of the present invention is within the range of the mass ratio of the block copolymer (B) to the methacrylic resin (A) described above.
The polymer composition of the present invention preferably has a melt flow rate of not less than 1 g/10 min., more preferably not less than 2 g/10 min. as measured according to ISO 1133 in order to achieve better moldability.

Since the polymer composition of the present invention is excellent not only in impact resistance but also in weather resistance and transparency and has resistance to decreased productivity due to mold contamination and the like, it can be molded into a desired shape, and subjected to various applications. Molding methods include, for example, hot-melt molding methods previously known in the art, such as injection molding method, compression molding method, extrusion molding method, vacuum molding method and the like. In the molded article, the structure of the dispersed phase in the polymer composition of the present invention is mostly maintained although the dispersed phase may be somewhat changed in its size and shape.

The polymer composition of the present invention can be used for, for example, signboard components such as an advertising pillar, a standing signboard, a wing signboard, a transom signboard, a roof signboard; display components such as a showcase, a divider panel, a store display; illuminator components such as a fluorescent lamp cover, a mood lighting cover, a lamp shade, a luminous ceiling, a luminous wall, a chandelier; interior design components such as a pendant, a mirror; building components such as a door, a dome, a safe windowpane, a partition, a stairs wainscot, a balcony wainscot, a roof of a leisure building; transport vehicle related components such as a windshield for airplanes,

a visor for pilots, a windshield of motorcycles, a windshield of motorboats, a visor for buses, a side visor, a rear visor, a head wing, a headlight cover for cars; components of electronic devices such as a face panel for an audiovisual system, a stereo cover, a protective mask for a television set, a vending machine; components for medical devices such as an incubator, Roentgen-ray parts; machinery-related components such as a machine cover, a meter cover, an experiment device, a ruler, a dial window, an observation window; optics related components such as a protection plate for liquid crystal, a light guide plate, a light guide film, a Fresnel lens, a lenticular lens, and a front panel of various displays, diffuser panel; traffic related components such as a road sign, a direction board, a mirror on a curved road, a sound insulating wall; film components such as a surface material for automobile interior, a surface material for a cellular phone, a marking film; components for home electronics such as a canopy material and control panel for a washing machine, a top panel of a rice cooker; others such as a greenhouse, large-sized tank, and a box tank, a clock panel, a bathtub, sanitary, a desk mat, an part for amusement item, a toy, a face protector for welding.

## EXAMPLES

The present invention is further described in a more specific way by showing the following Examples and Comparative Examples. The present invention is not intended to be limited to Examples below. Moreover, the present invention encompasses all aspects comprising those technical characteristics such as characteristic values, forms, manufacturing methods, applications described above in any combinations.
Chemicals as raw material compounds used to synthesize the block copolymer (B) in Examples and Comparative Examples had been dried and purified by the conventional methods.
The values of physical properties and the like in Examples and Comparative Examples were measured according to the following methods.

(1) The number average molecular weight (Mn), the weight average molecular weight (Mw), the molecular weight distribution (Mw/Mn) and the formation ratio of a block copolymer

The measurements were performed using tetrahydrofuran as an eluting solution on a TOSOH gel permeation chromatography system (HLC-8020) equipped with a differential refractive index (RI) meter as a detector, to which one TOSOH TSKgel G2000HHR column and two GMHHR-M columns are tandemly connected as gel permeation chromatography columns.
Sample solutions were prepared by precisely weighing 3 mg of a polymer, which was dissolved in 3 ml of tetrahydrofuran and then filtered through a 0.45 μm membrane filter. A flow rate of the eluting solution at the measurement was set to 1.0 ml/min. and a column temperature was set to 40°C.
Based on the calibration curve created with standard polystyrene, a weight average molecular weight (Mw), a number average molecular weight (Mn), a molecular weight distribution (Mw/Mn), and a formation ratio of a block copolymer were calculated as a molecular weight based on polystyrene.

(2) The ratio of polymerization conversion

Analysis was performed on a Shimadzu gas chromatography system GC-14A to which an INERT CAP 1 (df = 0.4 μm, 0.25 mm I.D. × 60 m) produced from GL Sciences Inc. was connected as a column, with the settings of an injection temperature of 180°C, a detector temperature of 180°C and a column temperature of 60°C which was maintained for 5 min. then changed to 200°C (maintained for 10 min.) with a rate of temperature rise of 10°C/min., and then the rate was calculated based on the analysis.

(3) The attached amount of side chain vinyl

A test solution was obtained by dissolving a block copolymer in deuterated chloroform. The test solution was analyzed using $^1$H-NMR (a magnetic resonance apparatus from JEOL Co., Ltd., JNM-LA400) to obtain an integrated intensity $C_0$ of proton (=$CH_2$) signals at chemical shifts between 4.7 and 5.2 ppm corresponding to 1,2-vinyl and an integrated intensity Do of a vinyl proton (=CH-) signal of a chemical shift between 5.2 and 5.8 ppm, respectively, and the attached amount of side chain vinyl $V_0$ [ml%] was calculated using the following equation.
$$V_0 = [(C_0/2)/\{(C_0/2) + (D_0-(C_0/2))/2\}] \times 100$$

(4) Glass transition temperature (Tg)

For the glass transition temperature (Tg) of poly(n-butyl acrylate) used as the polymer block (a), a value (poly (n-butyl acrylate): -49°C) described in "POLYMER HANDBOOK FOURTH Edition" VI /page 199, Wiley Interscience (1998) was used.
Moreover, a value derived from the relationship of the attached amount of 1,2-vinyl and Tg described in "ANIONIC POLYMERIZATION," page 434, MARCEL DEKKER (1996) was used for the glass transition temperature (Tg) of poly 1,3-butadiene used as a polymer block (b).

(5) Refractive index ($n_D$) of the block copolymer (B)

The block copolymer (B) was uniformly dissolved in toluene to a concentration of 30% by mass. The specific volume $V_3$ and the refractive index $n_{D3}$ of the solution, and the specific volume $V_1$ and the refractive index $n_{D1}$ of toluene were measured at 25°C. Based on these measured values, $r_1$ and $r_3$ were computed using the equation 1. Moreover, $r_2$ was computed using the equation 2. The mass fractions $w_1$ and $w_2$ were computed from the concentration of the solution. Then, the specific volume $V_2$ was computed using the equation 3. Densities $\rho_1$ and $\rho_3$ are the reciprocals of the specific volumes $V_1$ and $V_3$. Based on the computed $r_2$ and $V_2$, the refractive index $n_{D2}$ of the block copolymer (B) was calculated using the equation 1.
$$(n_D^2 - 1) / (n_D^2 + 2) \times V = r = \text{constant} \quad (\text{Eq. } 1)$$

$$r_3 = w_1 \times r_1 + w_2 \times r_2 \quad (\text{Eq. } 2)$$

$$V_2 = (1/\rho_1) - (1/w_2) \times [(1/\rho_1) - (1/\rho_3)] \quad (\text{Eq. } 3)$$

$n_D$: refractive index, V: specific volume, r: molecular refraction, w: mass fraction, p: density Subscript 1: toluene, subscript 2: block copolymer (B), subscript 3: solution Measured: $V_3$ , $n_{D3}$, $V_1$, $n_{D1}$
For the equations 1 and 2, see: "Thermodynamic, electrical and optical properties, "KOUBUNSHI JIKKENGAKU, a set of 18 volumes, vol. 12, January 5, 1984, 1st edition, 1st printing, the editor-in-chief of KOUBUNSHI JIKKENGAKU, the Society of Polymer Science, Kyoritsu shuppan Co., Ltd.
For the equation 3, see: "Polymer solution," KOUBUNSHI JIKKENGAKU, a set of 18 volumes, vol. 11, August 25, 1982, 1st edition, 1st printing, the editor-in-chief of KOUBUNSHI JIKKENGAKU, the Society of Polymer Science, Kyoritsu shuppan Co., Ltd.

(6) The mean diameter of a dispersed phase

An ultrathin section was sliced out from a molded article using a diamond knife. The section was stained with osmium tetroxide (a portion of polybutadiene was stained), and its observed image on a transmission electron microscope was photographed. Thirty dispersed phases captured as a whole were randomly selected, each of which was measured for its diameter. Their mean values were calculated.

(7) Refractive index ($n_D$) of Flowable polyorganosiloxane (C)

A refractive index at 25°C was measured with a Shimadzu Kalnew precision refractometer KPR-20.

(8) Transparency

Haze was measured for a 3 mm-thick sheet according to JIS K7136.

(9) Impact resistance

Charpy notched impact strength was measured according to ISO179-1eA.

(10) Rigidity

Flexural modulus was measured according to ISO178.

(11) Surface hardness

Hardness was measured by scratching a 3 mm-thick sheet with a pencil of various hardness according to ISO/DIS 15184.

Reference Example 1.

Production of Block copolymer (B-1)

(1) To a 1.5 L autoclave vessel equipped with a stirrer, 801 ml of toluene and 0.07 ml of 1,2-dimethoxyethane were added and purged with nitrogen for 20 minutes. To the solution added were 1.8 ml of a cyclohexane solution of 1.3mol/l secbutyllithium, and then 97 ml of 1,3-butadiene. The reaction was allowed at 30°C for 3 hours to obtain a reaction mixture containing 1,3-butadiene polymers.
The reaction mixture obtained was sampled and analyzed. The results showed that the 1,3-butadiene polymers (hereafter referred to as the polymer block (b)) in the reaction mixture had a number average molecular weight (Mn) of 51,000, a molecular weight distribution (Mw/Mn) of 1.06 and the attached amount of side chain vinyl of 30 mol%. A glass transition temperature of the polymer block (b) was calculated to be -77°C.
(2) The reaction mixture obtained above at (1) was cooled to -30°C, to which 17.2 ml of toluene solution containing 0.45 mol/l isobutylbis(2,6-di-t-butyl-4-methylphenoxy)aluminium, and 8.1 ml of 1,2-dimethoxyethane were added and stirred for 10 minutes to give a homogeneous solution.
(3) To the solution obtained above at (2), added was 71 ml of n-butyl acrylate with crushingly stirring for polymerization at -30°C for 3 hours. The reaction mixture obtained was sampled and a molecular weight based on polystyrene was measured by the GPC analysis. The butadiene - n-butyl acrylate diblock copolymer (hereafter referred to as an arm polymer block) in the reaction mixture had a number average molecular weight of 84,000 and a molecular weight distribution (Mw/Mn) of 1.02. A glass transition temperature of the polymer block (a) obtained by polymerizing n-butyl acrylate alone was calculated to be -49°C.
(4) The reaction mixture obtained above at (3) was maintained at -30°C, to which 2.0 ml of 1,6-hexanediol diacrylate was added with crushingly stirring, thereafter polymerization for 2 hours was carried out. Subsequently, about 1ml of methanol was added to inhibit the polymerization.
(5) The reaction mixture obtained above at (4) was poured to 8000 ml of methanol to precipitate the block copolymer (B-1). The yield of the block copolymer (B-1) obtained was almost 100%.
The block copolymer (B-1) obtained was a mixture of star shaped block copolymers and arm polymer blocks. A proportion of the star shaped block copolymers in the block copolymer (B-1) was 92% by mass as calculated from the area ratio in GPC.
The star shaped block copolymer, which had a structure where the arm polymer blocks were connected to form a star-like shape with an arm number of 3.92, had an Mn of 330,000 (arm number = 3.92), and a molecular weight distribution Mw/Mn of 1.16.
The arm polymer block was a diblock copolymer which comprises 49% by mass of the polymer block (b) composed of repeating units derived from 1,3-butadiene and 51% by mass of the polymer block (a) composed of repeating units derived from n-butyl acrylate.
The refractive index of the block copolymer (B-1) was 1.492. The properties of the block copolymer (B-1) are shown in Table 1. Note that, in Table 1, BA means n-butyl acrylate, and BD means 1,3-butadiene.

Reference Example 2. Production of Block copolymer (B-2)

(1) To a 1.5 L autoclave vessel equipped with a stirrer, 801 ml of toluene and 0.07 ml of 1,2-dimethoxyethane were added and then purged with nitrogen for 20 minutes. To the solution added were 1.8 ml of a cyclohexane solution of 1.3 mol/l secbutyllithium, and then 95 ml of 1,3-butadiene. The reaction was allowed at 30°C for 3 hours to obtain a reaction mixture containing 1,3-butadiene polymers.
The reaction mixture obtained was sampled and analyzed. The results showed that the 1,3-butadiene polymer (the polymer block (b)) in the reaction mixture had an Mn of 51,000, a molecular weight distribution (Mw/Mn) of 1.06 and the attached amount of side chain vinyl of 30 mol%. The glass transition temperature of the polymer block (b) was calculated to be -77°C.
(2) The reaction mixture obtained above at (1) was cooled to -30°C, to which 17.2 ml of a toluene solution

containing 0.45 mol/l isobutyl bis(2,6-dit-butyl-4-methylphenoxy)aluminium, and 8.1 ml of 1,2-dimethoxyethane were added and stirred for 10 minutes to give a homogeneous solution.

(3) Then, to the solution obtained above at (2), 72 ml of n-butyls acrylate was added with crushingly stirring for polymerization at -30°C for 3 hours. The reaction mixture obtained was sampled and analyzed for molecular weight by GPC (based on polystyrene). The butadiene - n-butyl acrylate diblock copolymer (B-2) in the reaction mixture had a number average molecular weight (Mn) of 84,000, and a molecular weight distribution (Mw/Mn) of 1.02.
The glass transition temperature of the polymer block (a) obtained by polymerizing n-butyl acrylate alone was calculated to be -49°C. In addition, the block copolymer (B-2) was a diblock copolymer comprising 48% by mass of the polymer block (b) composed of repeating units derived from 1,3-butadiene, and 52% by mass of the polymer block (a) composed of repeating units derived from n-butyl acrylate. The refractive index of the block copolymer (B-2) was 1.492. The properties of the block copolymer (B-2) are shown in Table 1.

[Table 1]

Table 1

| | Ref. Ex. 1 | Ref. Ex. 2 |
|---|---|---|
| Block copolymer | B-1 | B-2 |
| Coupling mode | Star-shaped | Diblock |
| Number average molecular weight* | 330,000 | 84,000 |
| Polymer block (a) Component | BA | BA |
| Polymer block (b) Component | BD | BD |
| The attached amount of side chain vinyl to the polymer block (b) $V_0$ [mol%] | 30 | 30 |
| Mass ratio (a) / (b) | 51/49 | 52/48 |
| Tg of Polymer block (a) [°C] | -49 | -49 |
| Tg of Polymer block (b) [°C] | -77 | -77 |
| Refractive index $n_D$ | 1.492 | 1.492 |
| *:Number average molecular weight based on polystyrene calculated by GPC. | | |

The flowable polyorganosiloxane used in Examples and Comparative Examples is silicone oil from Shin-Etsu Chemical Co., Ltd.
KF-968 (viscosity (25°C) 0.097 Pa·s, refractive-index (25°C) 1.403) and KF-96-500CS (viscosity (25°C) 0.49 Pa·s, refractive index (25°C) 1.402) shown in Table 2 are a polymer having a dimethylsiloxane unit represented by the formula [II], and KF-54 (viscosity (25°C) 0.43 Pa·s, refractive index (25°C) 1.505) is a polymer having a dimethylsiloxane unit and a diphenyl siloxane unit represented by the formula [III].

[Formula 2]

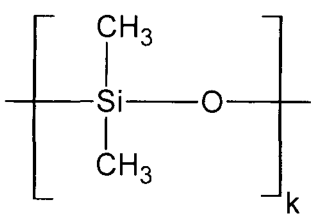

[II]

[Formula 3]

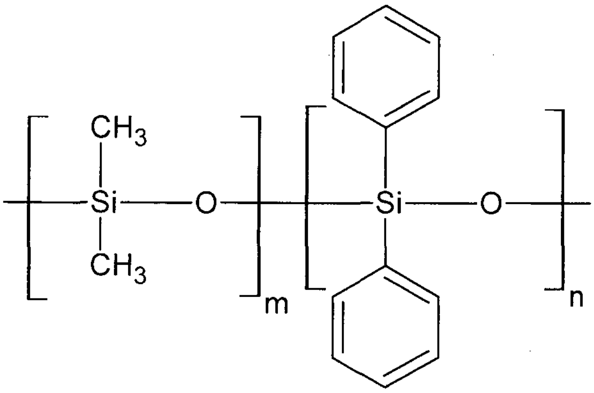

[III]

Example 1

To an autoclave equipped with a stirrer and a sampling tube, 57.8 parts by mass of purified methyl methacrylate, 3 parts by mass of methyl acrylate and 35 parts by mass of toluene were added, and then 4.2 parts by mass of the block copolymer (B-1) was added and stirred at 30°C for 8 hours to dissolve the block copolymer (B-1). Subsequently, 0.0375 part by mass of 1,1-di(t-butyl peroxy)cyclohexane ("Perhexa C" from NOF Corporation, hydrogen abstraction capability: 35%, 1 hour half-life temperature: 111.1°C) and 0.1 part by mass of n-octylmercaptan were added and dissolved to give a liquid raw material. Oxygen in the manufacturing apparatus was purged with nitrogen.
The liquid raw material was discharged from the autoclave in the constant amount, and fed to a 3 L tank reactor A controlled at 125°C for polymerization at a constant flow rate so that a mean residence time was 45 minutes. An aliquot of the reaction solution was taken through a sampling tube of the reactor A and the polymerization conversion ratio was found to be 44% by mass as measured by gas chromatography.

In a pipe area internally equipped with a static mixer from Norikake Engineering Co., Ltd., a liquid discharged from the tank reactor A was mixed with 1,1-di(t-butyl peroxy)cyclohexane (Perhexa C) by adding it in the amount of 0.003 part by mass relative to the whole liquid raw material, and the mixture was fed to a 5 L tank reactor B controlled at 135°C for polymerization at a constant flow rate so that a mean residence time was 90 minutes. An aliquot of the reaction solution was taken through a sampling tube of the reactor B and the polymerization conversion ratio was found to be 70% by mass as measured by gas chromatography.

In a pipe area internally equipped with a static mixer from Norikake Engineering Co., Ltd., a liquid discharged from the tank reactor B was mixed with t-butyl peroxybenzoate ("Perbutyl Z," hydrogen abstraction capability: 56%, 1 hour half-life temperature: 124.7°C) by adding it in the amount of 0.02 part by mass relative to the whole liquid raw material, and the mixture was fed to a tube reactor C with a temperature of the inner wall controlled at 135°C for polymerization at a constant flow rate so that a mean residence time was 10 minutes. The internal pressure of the tube reactor C was set to 0.7 MPa. An aliquot of the reaction solution was taken through an outlet of the tube reactor C and the polymerization conversion ratio was found to be 80% by mass as measured by gas chromatography.

A liquid discharged from the tube reactor C was fed to a tube reactor D with a temperature of the inner wall controlled at 140°C for polymerization at a constant flow rate so that a mean residence time was 50 minutes. The internal pressure of the tube reactor D was set to 0.7 MPa. An aliquot of the reaction solution was taken through an outlet of the tube reactor D and the polymerization conversion ratio was found to be 90% by mass as measured by gas chromatography.

A liquid discharged from the tube reactor D was heated to 230°C, and fed to a twin screw extruder, which was controlled at 260°C, at a constant flow rate. In the twin screw extruder, volatile matters composed mostly of unreacted monomers were isolated and removed, and the reactant was extruded into a strand shape. The strand was cut by a pelletizer to obtain a pelleted composition (AB-1). The residual volatile matters were 0.1% by mass.
The composition (AB-1) comprised 93 parts by mass of the methacrylic resin (A) composed of 95% by mass of repeating units derived from methyl methacrylate and 5% by mass of repeating units derived from methyl acrylate, and 7 parts by mass of the block copolymer (B-1), wherein a phase composed of the block copolymer (B-1) was dispersed in a continuous phase composed of the methacrylic resins (A).

To the pelleted composition (AB-1), the flowable polyorganosiloxane (C) and various additives were added according to the recipes shown in Table 2, and mixed by a Supermixer. The mixture was extruded into a strand shape at 240°C with a vent-type single screw extruder, and the strand was cut by a pelletizer to obtain a pelleted polymer

composition of the present invention.
This pelleted polymer composition was subjected to injection molding to produce a platelike molded article, and its various physical properties were measured. Measurement results are shown in Table 4.
When the polymer composition of the present invention was photographically observed using transmission electron microscopy, particulate dispersed phases dispersed in continuous phases were observed. Island phases were dispersed in the dispersed phase. The dispersed phase in which the total area of the island phases accounts for not less than 30% of the area of the dispersed phase was present in the amount of not less than 30% by mass of the total dispersed phase.

Examples 2 to 3, Comparative Examples 1 to 3

The pelleted polymer compositions of the present invention (Examples 2 to 3) and the pelleted polymer compositions different from the present invention (Comparative Examples 1 to 3) were obtained by the same method as used in Example 1 except that the flowable polyorganosiloxane (C) was added according to the recipes shown in Table 2 or 3. These pelleted polymer compositions were subjected to injection molding to produce platelike molded articles, and their physical properties were measured using the same method as used in Example 1. Measurement results are shown In Table 4.
[Table 2]

Table 2

| | Examples | | | | |
|---|---|---|---|---|---|
| | 1 | 2 | 3 | 4 | 5 |
| Composition (AB)<br>Composition (AB-1)<br>Composition (AB-2) | <br>100<br>- | <br>100<br>- | <br>100<br>- | <br>-<br>100 | <br>60<br>- |
| Acrylic resin | - | - | - | - | 40 |
| polyorganosiloxane (C)<br>KF-968<br><br>KF-96-500CS<br><br>KF-54 | <br>0.02<br>(0.29)<br>-<br><br>- | <br>0.01<br>(0.14)<br>-<br><br>- | <br>0.004<br>(0.06)<br>-<br><br>0.026<br>(0.37) | <br>-<br><br>0.02<br>(0.29)<br>- | <br>0.01<br>(0.25)<br>-<br><br>- |
| Phosphorus antioxidant<br>ADHP | 0.02 | 0.02 | 0.02 | 0.02 | 0.01 |
| Hindered phenol antioxidant<br>IR1010 | 0.02 | 0.02 | 0.02 | 0.02 | 0.01 |
| Heat deterioration inhibitor<br>SMGS | 0.03 | 0.03 | 0.03 | 0.03 | 0.02 |
| Ultraviolet light absorbent<br>TN329 | 0.05 | 0.05 | 0.05 | 0.05 | 0.05 |
| Higher alcohol parting agent<br>STOH | 0.03 | 0.03 | 0.03 | 0.03 | 0.03 |
| Glycerin fatty acid monoester parting agent<br>STMG | 0.01 | 0.01 | 0.01 | 0.01 | 0.01 |
| * The units for the values in the Table are parts by mass. | | | | | |

The values in the parenthesis are in parts by mass relative to 100 parts by mass of the block copolymer.
[Table 3]

Table 3

| | Comparative Examples | | | | |
|---|---|---|---|---|---|
| | 1 | 2 | 3 | 4 | 5 |
| Composition (AB)<br>Composition (AB-1)<br>Composition (AB-2) | 100<br>- | 100<br>- | 100<br>- | -<br>100 | 100<br>- |
| Acrylic resin | - | - | - | - | - |
| polyorganosiloxane (C)<br>KF-968 | - | 0.2 (2.9) | 0.0001 (0.015) | - | - |
| Silicone particles<br>TOSPEAL145 | - | - | - | - | 0.02 (0.29) |
| Phosphorus antioxidant<br>ADHP | 0.02 | 0.02 | 0.02 | 0.02 | 0.02 |
| Hindered phenol antioxidant<br>IR1010 | 0.02 | 0.02 | 0.02 | 0.02 | 0.02 |
| Heat deterioration inhibitor<br>SMGS | 0.03 | 0.03 | 0.03 | 0.03 | 0.03 |
| Ultraviolet light absorbent<br>TN329 | 0.05 | 0.05 | 0.05 | 0.05 | 0.05 |
| Higher alcohol parting agent<br>STOH | 0.03 | 0.03 | 0.03 | 0.03 | 0.03 |
| Glycerin fatty acid monoester parting agent<br>STMG | 0.01 | 0.01 | 0.01 | 0.01 | 0.01 |
| * The units for the values in the Table are parts by mass. | | | | | |

The values in the parenthesis are in parts by mass relative to 100 parts by mass of the block copolymer.

[Table 4]

Table 4

| | Examples | | | | | Comparative Examples | | | | |
|---|---|---|---|---|---|---|---|---|---|---|
| | 1 | 2 | 3 | 4 | 5 | 1 | 2 | 3 | 4 | 5 |
| Mean particle size of dispersed phase [μm] | 0.2 | 0.2 | 0.2 | 0.2 | 0.2 | 0.2 | 0.2 | 0.2 | - | 0.2 |
| Transparency<br>Haze [%] | 1.5 | 1.3 | 1.2 | 1.5 | 1.4 | 1.0 | 5.3 | 1.1 | 1.2 | 23.5 |
| Impact resistance<br>Charpy impact strength [KJ/m$^2$] | 6.2 | 5.6 | 6.5 | 5.9 | 4.9 | 4.5 | 6.6 | 4.4 | 6.0 | 1.6 |
| Rigidity<br>Flexural modulus [MPa] | 2300 | 2350 | 2250 | 2300 | 2650 | 2400 | 2100 | 2400 | 1700 | 2400 |
| Surface hardness | | | | | | | | | | |

(continued)

| | Examples | | | | | Comparative Examples | | | | |
|---|---|---|---|---|---|---|---|---|---|---|
| | 1 | 2 | 3 | 4 | 5 | 1 | 2 | 3 | 4 | 5 |
| scratch hardness | H | H | H | H | H | H | F | H | B | B |

Example 4

The pelleted composition (AB-2) was obtained by the same method as used in Example 1 except that the block copolymer (B-2) was substituted for the block copolymer (B-1). To the pelleted composition (AB-2) obtained, the flowable polyorganosiloxane (C) and various additives were added according to the recipes shown in Table 2, and mixed by a Supermixer.
The mixture was extruded into a strand shape at 240°C with a vent-type single screw extruder, and the strand was cut by a pelletizer to obtain a pelleted polymer composition of the present invention. This pelleted polymer composition was subjected to injection molding to produce a platelike molded article, and its various physical properties were measured. Measurement results are shown in Table 4.
When the plate-like molded article of the polymer composition in Example 4 was photographically observed using transmission electron microscopy, particulate dispersed phases dispersed in the continuous phase were observed. Island phases were dispersed in the dispersed phase.
The dispersed phase in which the total area of the island phases accounts for not less than 30% of the area of the dispersed phase was present in the amount of not less than 30% by mass of the total dispersed phase.

Example 5

A pelleted polymer composition of the present invention was obtained by the same method as used in Example 1 except that the pelleted composition (AB-1), an acrylic resin (methyl methacrylate/methacrylic acid: mass ratio 94/6, weight average molecular weight 120,000), the flowable polyorganosiloxane (C) and various additives shown in Table 2 were used instead. This pelleted polymer composition was subjected to injection molding to produce a platelike molded article, and its various physical properties were measured. Measurement results are shown in Table 4.

Comparative Example 4

A pelleted polymer composition was produced by the same method as used in Example 1 except that a pelleted methacrylic polymer composition in which 50 parts by mass of core-shell polymer particles with a particle size of 0.25 μm having 40% by mass of styrene-butyl acrylate random copolymers as its core and 60% by mass of methyl methacrylate polymers as its shell was kneaded in 50 parts by mass of the methacrylic resin (A) was substituted for the pelleted composition (AB-1) used in Example 1. This pelleted polymer composition was subjected to injection molding to produce a platelike molded article, and its various physical properties were measured. Measurement results are shown in Table 4.

Comparative Example 5

A pelleted polymer composition was obtained by the same method as used in Example 1 except that silicone particles (Momentive Performance Materials Japan Inc., TOSPEARL145 [a mean particle diameter of 4.5 μm]) were added instead of the flowable polyorganosiloxane (C). This pelleted polymer composition was subjected to injection molding to produce a platelike molded article, and its various physical properties were measured. Measurement results are shown in Table 4.

In Table 2 or 3,

ADHP represents 2,2-methylenebis(4,6-di-t-butylphenyl)octylphosphite;
IR1010 represents pentaerythrityl tetrakis[3-(3,5-di-t-butyl-4-hydroxyphenyl)propionate];
SMGS represents 2,4-di-t-amyl-6-(3',5'-di-t-amyl-2'-hydroxy-α-methylbenzyl)phenyl acrylate;
TN329 represents 2-(2H-benzotriazol-2-yl)-4-(1,1,3,3-tetramethylbutyl)phenol;
STOH represents stearyl alcohol;

STMG represents stearic acid monoglyceride.

As shown in Table 4, the polymer composition of the present invention is found to have excellent impact resistance and transparency as compared with the composition in Comparative Example 1 which does not contain the flowable polyorganosiloxane (C) or the compositions in Comparative Examples 2 and 3 in which the amount of the flowable polyorganosiloxane (C) is outside of the range of the present invention. In addition, the rigidity and surface hardness are found to be excellent as compared with those of the composition in Comparative Example 4 in which the core-shell polymer particles are compounded instead of the block copolymer (B) of the present invention. Further, the transparency and impact resistance are found to be excellent as compared with those of the compound in Comparative Example 5 in which silicone particles are added instead of the flowable polyorganosiloxane (C).

## Claims

1. A polymer composition comprising a methacrylic resin (A) having not less than 50% by mass of repeated units derived from methyl methacrylate, a block copolymer (B) having a polymer block (a) composed of repeated units derived from an alkyl (meth)acrylate ester and a polymer block (b) composed of repeated units derived from a conjugated diene compound, and flowable polyorganosiloxane (C),
wherein the amount of the block copolymer (B) is 1 to 80 parts by mass relative to 100 parts by mass of the methacrylic resin (A),
the amount of the flowable polyorganosiloxane (C) is 0.05 to 0.5 part by mass relative to 100 parts by mass of the block copolymer (B), and
a phase composed of the block copolymer (B) is dispersed in a continuous phase composed of the methacrylic resins (A).

2. The polymer composition according to claim 1,
wherein the flowable polyorganosiloxane (C) is polydimethylsiloxane.

3. The polymer composition according to claim 1,
wherein the flowable polyorganosiloxane (C) has a viscosity of 0.01 to 1 Pa·s at 25°C.

4. The polymer composition according to claim 1,
wherein the flowable polyorganosiloxane (C) has a refractive index of 1.30 to 1.60.

5. The polymer composition according to claim 1,
wherein the block copolymer (B) is a star shaped block copolymer comprising a plural of arm polymer blocks, and a number average molecular weight based on standard polystyrene as calculated by gel permeation chromatography satisfies the expression:

[Number average molecular weight of the star shaped block copolymer] > 2 × [Number average molecular weight of the arm polymer block].

6. The polymer composition according to claim 1, wherein the alkyl (meth)acrylate ester is n-butyl acrylate and the conjugated diene compound is 1,3-butadiene.

7. The polymer composition according to claim 1, wherein the block copolymer (B) has a refractive index of 1.48 to 1.50.

8. The polymer composition according to claim 5, wherein the arm polymer block is an a-b diblock copolymer.

9. The polymer composition according to claim 1, wherein the methacrylic resin (A) has a weight average molecular weight of 70,000 to 200,000.

10. The polymer composition according to claim 1, wherein the methacrylic resin (A) has a ratio of the weight average molecular weight/the number average molecular weight of 1.9 to 3.0.

**11.** The polymer composition according to claim 1, wherein a mean diameter of the dispersed phase is 0.05 to 2 μm.

**12.** The polymer composition according to claim 1,
wherein the dispersed phase forms a sea-island structure, and the mean value of the total area of island phases in the dispersed phase accounts for not less than 30% of a mean area of the dispersed phase.

**13.** The polymer composition according to claim 1, further comprises an antioxidant, a heat deterioration inhibitor, an ultraviolet light absorbent and/or a parting agent.

**14.** A molded article made of the polymer composition according to claim 1.

**INTERNATIONAL SEARCH REPORT**

International application No.
PCT/JP2011/004862

A. CLASSIFICATION OF SUBJECT MATTER
*C08L33/12*(2006.01)i, *C08L53/00*(2006.01)i, *C08L83/04*(2006.01)i

According to International Patent Classification (IPC) or to both national classification and IPC

B. FIELDS SEARCHED

Minimum documentation searched (classification system followed by classification symbols)
C08K3/00-13/08, C08L1/00-101/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2008/032732 A1 (Kuraray Co., Ltd.),<br>20 March 2008 (20.03.2008),<br>claims; paragraphs [0016], [0022]; examples<br>(Family: none) | 1-14 |
| Y | JP 2-45547 A (Mitsubishi Rayon Co., Ltd.),<br>15 February 1990 (15.02.1990),<br>pages 1, 3<br>(Family: none) | 1-14 |
| Y | JP 6-220276 A (BASF AG.),<br>09 August 1994 (09.08.1994),<br>claim 1; paragraph [0003]<br>& EP 0599067 A1 | 1-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 September, 2011 (20.09.11) | 27 September, 2011 (27.09.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2011/004862

C (Continuation). DOCUMENTS CONSIDERED TO BE RELEVANT

| Category* | Citation of document, with indication, where appropriate, of the relevant passages | Relevant to claim No. |
|---|---|---|
| Y | JP 7-292189 A (BASF AG.), 07 November 1995 (07.11.1995), claim 1; paragraph [0003] & EP 0591804 A1 | 1-14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008032732 A
- JP 2009227997 A
- JP 2009227998 A
- JP 2009227999 A
- JP 2009235396 A
- JP H520442 A


### Non-patent literature cited in the description


- POLYMER HANDBOOK. Wiley Interscience, 1998, vol. VI, 199
- ANIONIC POLYMERIZATION. MARCEL DEKKER, 1996, 434
- KOUBUNSHI JIKKENGAKU. Kyoritsu shuppan Co., Ltd, 05 January 1984, vol. 12
- Polymer solution. KOUBUNSHI JIKKENGAKU. Kyoritsu shuppan Co., Ltd, 25 August 1982, vol. 11